Europäisches Patentamt

European Patent Office

Office européen des brevets

(11) Veröffentlichungsnummer: **0 092 635**
A1

## (12) EUROPÄISCHE PATENTANMELDUNG

(21) Anmeldenummer: **83100276.1**

(22) Anmeldetag: **14.01.83**

(51) Int. Cl.$^3$: **B 21 D 43/22**
**B 65 G 57/04, B 23 Q 7/00**

(30) Priorität: **24.04.82 DE 3215393**

(43) Veröffentlichungstag der Anmeldung:
**02.11.83 Patentblatt 83/44**

(84) Benannte Vertragsstaaten:
**CH DE GB IT LI**

(71) Anmelder: **GOETZE AG**
**Bürgermeister-Schmidt-Strasse 17**
**D-5093 Burscheid 1(DE)**

(72) Erfinder: **Engel, Werner**
**Beerenstrasse 44**
**D-5090 Leverkusen 3(DE)**

(72) Erfinder: **Müller, Hans-Joachim**
**Im Schmittenhof 23**
**D-5630 Remscheid 11(DE)**

(54) Vorrichtung zum Abtransport von Werkstücken.

(57) Eine Vorrichtung zum kontinuierlichen Abtransport von magnetisierbaren Werkstücken (7) besteht aus einem Transportband (1), in dessen einer Umlenkrolle (2) ein Magnet (4) in Form einer Spule (5) angeordnet ist, der die Werkstücke (7) gezielt so lange festhält, daß sie, auf einer vorherbestimmbaren Wurfbahn ausgerichtet, im Bereich einer Auffangeinrichtung (6) ankommen und dort stapelbar sind. Gleichzeitig werden die Werkstücke (7) im Bereich der Umlenkrolle (2) entmagnetisiert.

FIG.1

Croydon Printing Company Ltd.

- 1 -

Vorrichtung zum Abtransport von Werkstücken.

Die Erfindung betrifft eine Vorrichtung zum kontinuierlichen Abtransport von magnetisierbaren Werkstücken, insbesondere von Kolbenringen, mittels eines mit mindestens einem Magneten zusammenwirkenden Transportbandes sowie einer Auffangeinrichtung für die Werkstücke.

Durch die DE - AS 20 09 138 ist bereits eine Vorrichtung zum kontinuierlichen Abtransport von Werkstücken, insbesondere von flachen aus einem Blech ausgestanzten ringförmigen Teilen, bekannt, wobei diese von der Stanzeinheit ausgehend auf mehreren Transportbändern befördert werden. Das erste Transportband weist im Bereich des oberen Trums eine Anzahl von Permanentmagneten auf, während bei dem sich anschließenden Transportband im Bereich des unteren Trums eine Anzahl von Permanentmagneten vorgesehen ist. Unterhalb des äußeren Endes des zweiten Transportbandes ist ein die Werkstücke auffangender Stapeldorn angeordnet. Der Nachteil dieser Vorrichtung ist darin zu sehen, daß die transportierten Werkstücke unter dem Einfluß der Magneten ebenfalls magnetisch werden und so nicht sicher, d.h. mit ihrer Ausnehmung, auf den Stapeldorn fallen. Des weiteren ist eine große Transportgeschwindigkeit der Werkstücke nicht möglich.

Der Erfindung liegt die Aufgabe zugrunde, ausgehend vom Stand der Technik, mit einfachen Mitteln eine Vorrichtung für den Abtransport von magnetisierbaren Werkstücken zu konzipieren, wobei sichergestellt ist, daß nahezu jedes der mit großer Geschwindigkeit transportierten Werkstücke, insbesondere aber Kolbenringe, in ausgerichteter Lage von der Auffangeinrichtung aufgenommen werden kann. Des weiteren

- 2 -

soll bei magentisierten Werkstücken eine Entmagnetisierung erfolgen.

Diese Aufgabe wird erfindungsgemäß dadurch gelöst, daß sich der Magnet, in Transportrichtung der Werkstücke gesehen, in der vor den Werkstücken angeordneten Umlenkrolle befindet. Dadurch wird der Vorteil erreicht, daß die Werkstücke, insbesondere aber Kolbenringe, im Bereich der magnetischen Umlenkrolle so lange festgehalten werden, bis sie sich aufgrund ihres Beharrungsvermögens und der Transportgeschwindigkeit von der Umlenkrolle lösen, sich auf einer genau vorherbestimmbaren Wurfbahn in Richtung auf eine beabstandete Auffangeinrichtung bewegen und von dieser in ausgerichteter Lage einzeln aufgenommen werden.

Um ein sicheres Funktionieren der Vorrichtung zu gewährleisten, d. h. um zu vermeiden, daß mehrere Werkstücke axial übereinanderliegend am Bandende angelangen, wird vorgeschlagen, daß mit dem Transportband ein Niederhalter für die Werkstücke zusammenwirkt, der etwa auf die jeweilige axiale Höhe der Werkstücke eingestellt wird.

Damit das Werkstück sicher an der magnetischen Umlenkrolle bis zum letzten Moment des sich Lösens haften bleibt, sollte der Niederhalter ausschließlich im Bereich der Umlenkrolle angeordnet sein, und zwar, in Transportrichtung gesehen, vorzugsweise bis über den halben Durchmesser der Umlenkrolle hinaus. Das Werkstück wird auf diese Art und Weise so lange zwischen der Umlenkrolle und dem Niederhalter gehalten, bis es, in Umfangsrichtung der Umlenkrolle gesehen, in jedem Fall von dieser noch mitgenommen wird. Dem Werkstück wird somit eine genau vorherbestimmbare Wurfbahn in Abhängigkeit von seinem Beharrungsvermögen, der Transportgeschwindigkeit und

- 3 -

der Feldstärke des Magneten aufgezwungen.

Werkstücke, die gegebenenfalls durch vorangegangene Arbeitsgänge magnetisiert worden sind, müssen sowohl für ihre weitere Handhabung ( Aneinanderkleben ), als auch für die späteren Einsatzbedingungen entmagnetisiert werden. Dies gilt,
insbesondere für Kolbenringe, die, gegebenenfalls bei infolge von noch vorhandener Magnetkraft, kleinste Metallspäne oder dergleichen anziehen, die sich im Betriebszustand
negativ auf das Verschleißverhalten auswirken. Es wird daher
vorgeschlagen, diese im Bereich der Umlenkrolle zu entmagnetisieren. Dies kann z.B. durch bekannte um das Transportband herumgelegte Entmagnetisierungsspulen geschehen, womit
jedoch ein weiterer Aufwand an Material und Kosten verbunden
wäre.

Einem weiteren Gedanken der Erfindung gemäß wird vorgeschlagen, innerhalb der Umlenkrolle, z.B. durch eine Spule, ein
magnetisches Wechselfeld zu erzeugen und auf diese Art und
Weise die Werkstücke zu entmagnetisieren. Die Werkstücke
werden nunmehr - wie schon angesprochen - von der magnetisierbaren Umlenkrolle so lange wie möglich festgehalten und
gleichzeitig für deren weitere Handhabung entmagnetisiert.
Als Auffangeinrichtungen bieten sich bekannte Stapeldorne
an, die entweder schräg oder waagerecht angeordnet werden
und die Werkstücke in ausgerichteter Lage einzeln aufnehmen.

Die Erfindung ist in der Zeichnung dargestellt und wird im
folgenden näher beschrieben. Es zeigen:

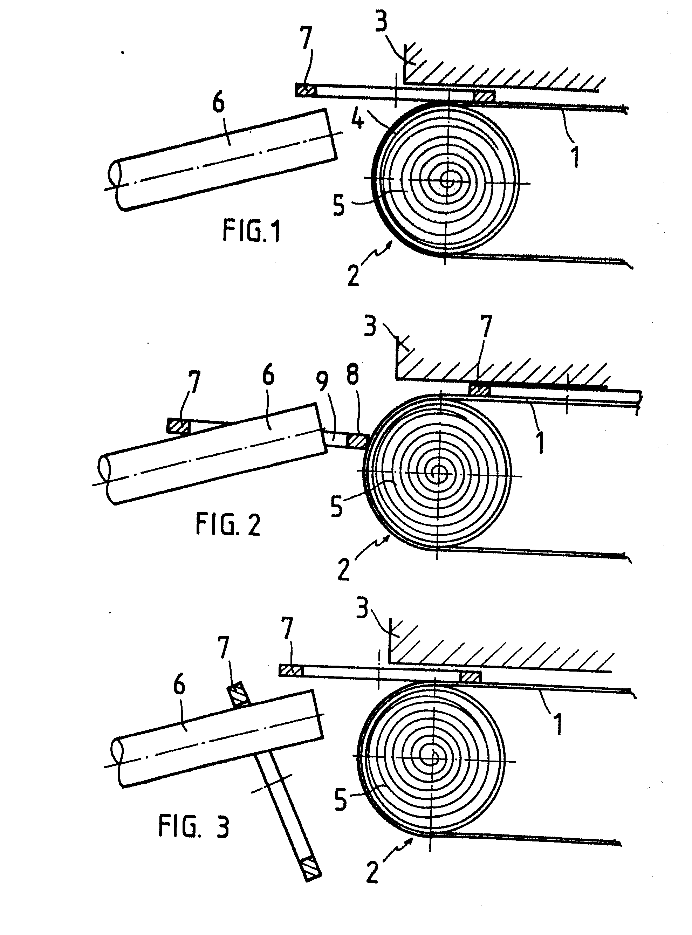

    Figuren 1 - 3    Prinzipskizzen der Vorrichtung
    als Bewegungsablauf.

Die Vorrichtung besteht im wesentlichen aus einem Transport-

- 4 -

band 1, Umlenkrollen 2 und einem Niederhalter 3. Die Umlenkrolle 2 ist magnetisierbar, und zwar durch einen in einer Ausnehmung derselben angeordneten Magneten 4 in Form einer Spule 5 zur Erzeugung eines magnetischen Wechselfeldes. In definiertem Abstand zum Transportband 1, beziehungsweise der Umlenkrolle 2, ist ein Auffangdorn 6 schräg im Raum stehend angeordnet. Der Bewegungsablauf der Werkstücke 7, hier Kolbenringe, stellt sich etwa wie folgt dar:
Der Niederhalter 3, der sich ausschließlich im Bereich der Umlenkrolle 2 befindet und diese etwa zu 75 % ihres Durchmessers überragt, ist auf eine axiale Höhe eingestellt, die etwa der axialen Höhe des Werkstückes 7 entspricht.

In Figur 1 ist dargestellt, wie das Werkstück 7, ohne daß es abkippen kann, in waagerechter Lage zwischen der Umlenkrolle 2 und dem Niederhalter 3 bewegt wird.

Nachdem das Werkstück 7 den Bereich des Niederhalters 3 passiert hat, wird es von der magnetisierten Umlenkrolle 2 im Bereich seines hinteren Endes 8 festgehalten und in Umfangsrichtung weitertransportiert. Dabei befindet sich die konzentrische Ausnehmung 9 des Werkstückes 7 bereits im Bereich des Auffangdornes 6 ( Figur 2 ). Erst wenn das Beharrungsvermögen des Werkstückes 7 und die Geschwindigkeit des Transportbandes 1 die Magnetkraft der Umlenkrolle 2 übersteigen, löst sich das Werkstück 7 von der Umlenkrolle 2 und wird auf einer bestimmten Wurfbahn vollständig auf den Auffangdorn 6 bewegt ( Figur 3 ). Da - wie schon angesprochen - die Spule 5 ein magnetisches Wechselfeld erzeugt, werden die Werkstücke 7 gleichzeitig entmagnetisiert. Über die Feldstärke der Spule 5 in der Umlenkrolle 2 können sowohl der Bewegungsablauf als auch der Entmagnetisierungsgrad der Werkstücke beeinflußt werden.

- 1 -

Patentansprüche:

1. Vorrichtung zum kontinuierlichen Abtransport von magnetisierbaren Werkstücken, insbesondere von Kolbenringen, mittels eines umlaufenden mit mindestens einem Magneten zusammenwirkenden Transportbandes sowie einer Auffangeinrichtung für die Werkstücke, dadurch gekennzeichnet, daß sich der Magnet, in Transportrichtung der Werkstücke ( 7 ) gesehen, in der vor den Werkstücken angeordneten Umlenkrolle ( 2 ) befindet.

2. Vorrichtung nach Anspruch 1, dadurch gekennzeichnet, daß mit dem Transportband ( 1 ) ein Niederhalter ( 3 ) für die Werkstücke ( 7 ) zusammenwirkt.

3. Vorrichtung nach den Ansprüchen 1 und 2, dadurch gekennzeichnet, daß der Niederhalter ( 3 ) ausschließlich im Bereich der Umlenkrolle ( 2 ) angeordnet ist.

4. Vorrichtung nach den Ansprüchen 1 bis 3, dadurch gekennzeichnet, daß sich der Niederhalter ( 3 ), in Transportrichtung gesehen, zumindest bis über die halbe Umlenkrolle ( 2 ) erstreckt.

5. Vorrichtung nach den Ansprüchen 1 bis 4, gekennzeichnet durch die Entmagnetisierung der Werkstücke ( 7 ) im Bereich der Umlenkrolle ( 2 ).

6. Vorrichtung nach den Ansprüchen 1 bis 5, gekennzeichnet durch die Erzeugung eines magnetisierten Wechselfeldes innerhalb der Umlenkrolle ( 2 ) durch eine Spule ( 5 ).

- 2 -

7.  Vorrichtung nach den Ansprüchen 1 bis 5, dadurch gekennzeichnet, daß die Auffangeinrichtung ( 6 ) aus
    einem schräg im Raum angeordneten Stapeldorn besteht.

0092635

FIG.1

FIG. 2

FIG. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DD-A- 86 593 (PHILIPP et al.)<br>* Seite 2, linke Spalte, Zeile 46<br>- Seite 3, linke Spalte, Zeile 2;<br>Figur * | 1 | B 21 D 43/22<br>B 65 G 57/04<br>B 23 Q 7/00 |
| D,Y | DE-B-2 009 138 (BROWN, BOVERI & CIE AG)<br>* Spalte 3, Zeilen 5-37; Figur 2 * | 1 | |
| A | DE-A-2 019 661 (SCHULER GMBH)<br>* Seite 13, Zeilen 10-19;<br>Ansprüche 8-10; Figuren 1, 4 * | 2-4 | |
| A | DE-A-2 624 887 (VEB WERKZEUGMASCHINENKOMBINAT 7. OKTOBER BERLIN)<br>* Seite 1, Zeilen 2-17; Ansprüche 1, 2; Figuren 1, 2 * | 5,6 | RECHERCHIERTE SACHGEBIETE (Int. Cl. 3) |
| A | DE-U-7 119 722 (GOETZEWERKE F. GOETZE AG)<br>* Anspruch 2 * | 7 | B 21 D 43/00<br>B 23 Q 7/00<br>B 65 G 15/58<br>B 65 G 47/00<br>B 65 G 54/02 |
| A | DE-B-1 209 502 (FA. S. FRÖHLING)<br>* Figuren 1, 6 * | 1 | B 65 G 57/00<br>H 01 F 13/00 |

Der vorliegende Recherchenbericht wurde für alle Patentansprüche erstellt.

| Recherchenort | Abschlußdatum der Recherche | Prüfer |
|---|---|---|
| BERLIN | 28-06-1983 | MARTIN A E W |